# EUROPÄISCHE PATENTSCHRIFT

(11) **EP 1 151 174 B1**
(45) Veröffentlichungstag und Bekanntmachung des Hinweises auf die Patenterteilung: **07.03.2007**
(21) Anmeldenummer: 00938563.4
(22) Anmeldetag: 18.05.2000
(51) Int. Cl.: E05B 49/00, B60R 25/00

(54) **VERFAHREN ZUR SCHLÜSSELLOSEN VERRIEGELUNG EINES KRAFTFAHRZEUGS**
METHOD FOR LOCKING A MOTOR VEHICLE IN A KEYLESS MANNER
PROCEDE POUR VERROUILLER SANS CLE UN VEHICULE AUTOMOBILE

(30) Priorität: 19.05.1999 DE 19922980
(43) Veröffentlichungstag der Anmeldung: 07.11.2001
(73) Patentinhaber: ROBERT BOSCH GMBH, 70442 Stuttgart (DE)
(72) Erfinder: GIEHLER, Elmar, D-70499 Stuttgart (DE); WACH, Achim, D-71706 Markgroeningen (DE); KAISER, Karl-Heinz, D-71732 Tamm (DE)
(86) Internationale Anmeldenummer: PCT/DE2000/001560
(87) Internationale Veröffentlichungsnummer: WO 2000/071842

(56) Entgegenhaltungen:
- EP-A- 0 523 602
- DE-C- 19 711 901
- DE-C- 19 735 658
- US-A- 5 499 022

## Beschreibung

### Stand der Technik

Die Erfindung geht aus von einem Verfahren zur schlüssellosen Verriegelung eines Kraftfahrzeugs nach der Gattung des unabhängigen Anspruchs. Aus der EP 158 354 B1 ist bereits ein schlüsselloses Zugangssystem für Kraftfahrzeuge mit einem tragbaren Sender/Empfänger bekannt. Anhand eines von dem Sender/Empfänger ausgesendeten Signals wird die Berechtigung des Benutzers überprüft, Zugangs- und Fahrberechtigung für das Kraftfahrzeug zu erhalten. Um das Einschließen des Senders/Empfängers zu unterbinden, wird der Benutzer bei einer gewünschten Verriegelung durch ein Alarmsignal darauf aufmerksam gemacht, daß sich der Sender/Empfänger noch im Innenraum des Fahrzeugs befindet. Die endgültige Verriegelung des Kraftfahrzeugs wird jedoch erst nach einer bestimmten Zeitspanne durchgeführt, um dem Benutzer die Möglichkeit zu geben, innerhalb dieser Zeitspanne den Sender/Empfänger noch aus dem Fahrzeuginnenraum zu holen. Unterläßt er dies, erfolgt eine Verriegelung und die Deaktivierung des im Innenraum befindlichen Senders/Empfängers. Ein erneuter Zugang zu dem Fahrzeuginnenraum ist nur in Verbindung mit einem mechanischen Fahrzeugschlüssel möglich.

Aus der US 5 499 022 A ist ein schlüsselloses Zugangssystem zum Verriegeln und Öffnen eines Innenraums eines Kraftfahrzeugs bekannt mit einem fahrzeugeigenen Sender/Empfänger zum Übertragen von Signalen von bzw. zu einem Sender/Empfänger eines tragbaren Transponders. Durch Bestimmung der relativen Position des Transponders zum Innenraum des Kraftfahrzeugs ist die Vorrichtung in der Lage zu erkennen, ob der Transponder im Innenraum vergessen wurde. Dazu verfügt der Transponder über entsprechende Mittel, die ein Signal erzeugen und dieses an den Sender/Empfänger des Kraftfahrzeugs aussenden. Für den Fall, dass der Transponder im Innenraum vergessen wurde, vermeidet ein fahrzeugeigenes Steuergerät das Verriegeln der Türen und aktiviert ein hörbares oder sichtbares Alarmsignal.

Die DE 197 35 658 C1 offenbart ein Verfahren zur Vermeidung des Missbrauchs von in einem Fahrzeug eingeschlossenen Transpondern, die Teil eines schlüssellos arbeitenden Fahrzeugzugangs- und Fahrberechtigungssystems sind und mit einer im Fahrzeug befindlichen Steuerung für Zugangs- und Fahrberechtigung zusammenwirken. Auf einen Verriegelungsbefehl hin gibt die Steuerung ein Prüfsignal ab, mittels dessen festgestellt wird, ob sich nach dem Verriegeln noch Transponder im Fahrzeuginnenraum befinden. Transponder, die nach dem Verriegeln als im Fahrzeuginnenraum befindlich erkannt werden, werden in einem der Steuerung zugeordneten Speicher registriert. Beim folgenden ordnungsgemäßen Fahrzeugzugang werden nicht im Innenraum wiedererkannte Transponder gesperrt.

In der EP 0 523 602 A1 ist ein Verfahren zum Erkennen eines im Fahrzeuginnern eingeschlossenen tragbaren Transponders für ein schlüsselloses Zugangssystem für Fahrzeuge bekannt, bei dem über einen beim Verriegeln ausgelösten Frage-Antwort-Dialog die Position des Transponders erkannt und ggf. ein Signal ausgelöst wird. Nachdem der Dialog mit der Aufgabe eines Verriegelungsbefehls ausgelöst wurde, erfolgt die Verriegelung erst, wenn der Transponder außerhalb des Fahrzeugs erkannt wird.

Die DE 197 11 901 C1 zeigt ein Diebstahlschutzsystem für ein Kraftfahrzeug, dem Außenschlüssel und Innenschlüssel zugeordnet sind. Mit den Schlüsseln kann die Zentralverriegelung und die Wegfahrsperre fernbedient werden, wobei der Innenschlüssel zur Inbetriebnahme des Fahzeugs dient und gesperrt wird, wenn er sich im Kraftfahrzeug befindet und mit einem anderen Schlüssel die Türen verriegelt werden. Der Innenschlüssel wird wieder freigegeben, wenn die Türen mit einem anderen Schlüssel entriegelt werden. Somit kann der Innenschlüssel ohne Sicherheitseinschränkungen ständig im Fahrzeug verbleiben.

Der Erfindung liegt die Aufgabe zugrunde, ein benutzerfreundlicheres Bedienkonzept anzugeben, bei dem ein Benutzer wieder in das Fahrzeug gelangt, wenn er nicht rechtzeitig auf ein ausgesendetes Warnsignal reagiert, ohne die Sicherheit gegen unbefugte Benutzung zu vernachlässigen. Diese Aufgabe wird durch die Merkmale des unabhängigen Anspruchs gelöst.

### Vorteile der Erfindung

Das erfindungsgemäße Verfahren zur schlüssellosen Verriegelung eines Kraftfahrzeugs umfasst einen an der linken Seite des Kraftfahrzeugs angeordneten linken Sender/Empfänger und einen an der rechten Seite des Kraftfahrzeugs angeordneten rechten Sender/Empfänger sowie eine Mehrzahl von tragbaren Transpondern, die jeweils ein Transponder-Bedienelement aufweisen und die mit dem linken und/oder dem rechten Sender/Empfänger einen Code austauschen. Ein in dem Kraftfahrzeug integriertes Steuergerät vergleicht den vom jeweiligen Transponder gesendeten Code mit einem erwarteten Code und steuert bei Übereinstimmung ein Schließsystem des Kraftfahrzeugs im Sinne eines Verriegelns an. Weiterhin wird ein zu dem Kraftfahrzeug gehörendes Anzeigemittel von dem Steuergerät angesteuert. Durch Betätigung eines außerhalb des Kraftfahrzeugs befindlichen Außenbedienelements oder des Transponder-Bedienelements wird ein Verriegelungsbefehl erzeugt. In einem ersten Schritt wird von dem linken und/oder rechten Sender/Empfänger des Kraftfahrzeugs ein Suchsignal abgesetzt, wenn eine Betätigung zumindest eines der Bedienelemente erfolgt, um anhand des von dem zumindest einen Transponder als Antwort auf das Suchsignal an den jeweiligen Sender/Empfänger des Kraftfahrzeugs zurückgesendeten Codes die Position des entsprechenden Transponders zu bestimmen. In einem zweiten Schritt wird das Anzeigemittel angesteuert, wenn sich zumindest einer der Transponder im Innenraum des Kraftfahrzeugs oder in einem Außenbereich der dem betätigten Bedienelement gegenüberliegenden Fahrzeugseite befindet. In einem dritten Schritt wird das Schließsystem des Kraftfahrzeugs im Sinne eines Verriegelns angesteuert, wenn zumindest eines der Bedienelemente erneut betätigt wird. Das Anzeigemittel wird auch dann angesteuert, wenn sich der Beifahrer im Besitz eines Transponders befindet, jedoch der Fahrer auf der Fahrerseite das Bedienelement betätigt, um einen Verriegelungsvorgang auszulösen. In diesem Fall erfolgt die Verriegelung nicht sofort, es wird vielmehr die gleiche Warnsequenz wie für den Fall ausgeführt, daß sich der Transponder noch im Innenraum des Fahrzeugs befindet. Hingegen wird die Verriegelung sofort durchgeführt, wenn sich der Transponder auf derselben Fahrzeugseite befindet, an der auch das Bedienelement betätigt wurde. Dadurch wird auch die Situation abgedeckt, daß ein Unberechtigter auf der Beifahrerseite eine Verriegelung auslösen möchte, wenn sich der Fahrer im selben Moment mit zugehörigem Transponder auf der Fahrerseite befindet. In diesem Fall unterbleibt vorerst die Verriegelung, lediglich bei erneutem Betätigen des Bedienelements wird sie ausgeführt. Dieser Aktion geht jedoch die Anzeige eines Warnsignals voraus, so daß der Benutzer auf die kritische Situation aufmerksam gemacht wird.

In einer zweckmäßigen Weiterbildung ist vorgesehen, daß das Schließsystem im dritten Schritt in der Weise im Sinne eines Verriegelns angesteuert wird, daß ein Öffnen der Fahrzeugtür nur durch ein im Innennraum des Kraftfahrzeugs befindliches Innenbedienelement möglich ist. Damit kann ein im Innenraum befindlicher Beifahrer, der einen Transponder mit sich führt, das Fahrzeug noch verlassen, um einem Einsperren im Fahrzeuginnenraum zu entgehen. In einer vorteilhaften Weiterbildung ist diese Möglichkeit für eine vorgebbare Zeitspanne vorgesehen. Nach dem Verstreichen dieser Zeitspanne läßt das Schließsystem ein Öffnen über das Innenbedienelement nicht mehr zu. Damit ist ein Zustand des Schließsystems erreicht, der im Falle eines möglichen Einbruchversuchs einen Dieb daran hindert, durch Zerstörung z.B. des Seitenfensters das Kraftfahrzeug über das Innenbedienelement zu öffnen.

Eine vorteilhafte Ausgestaltung sieht in dem dritten Schritt vor, daß im Innenraum erkannte Transponder in der Weise deaktiviert werden, daß ein von diesen gesendeter Code nicht als zulässig erkannt wird. Der Mißbrauch im Innenraum verbliebener Transponder ist nicht mehr möglich. Weiterhin kann mit dem Deaktivieren der im Innenraum befindlichen Transponder in einem Speicher eine Zusatzinformation wie beispielsweise die Uhrzeit oder der Kilometerstand hinterlegt werden. Diese Daten können als Nachweis gegenüber der Versicherung herangezogen werden.

Eine zweckmäßige Ausgestaltung sieht eine Aktivierung der im dritten Schritt deaktivierten Transponder mit dem Entriegeln des Schließsystems vor. Der Entriegelung geht ein Codeaustausch mit einem als gültig erachteten Transponder voraus. Damit ist gewährleistet, daß nur ein berechtigter Transponderbesitzer Zugriff auf die im Innenraum verbliebenen Transponder hat. Für einen Einbrecher jedoch sind die im Innenraum befindlichen Transponder wertlos, weil sich die Information über die Transponderdeaktivierung im Steuergerät befindet. Auf dieses hat der Einbrecher nur erschwerten Zugriff. Weitere zweckmäßige Weiterbildungen ergeben sich aus weiteren abhängigen Ansprüchen und aus der Beschreibung.

### Zeichnung

Ein Ausführungsbeispiel der Erfindung ist in der Zeichnung dargestellt und wird im folgenden näher beschrieben.

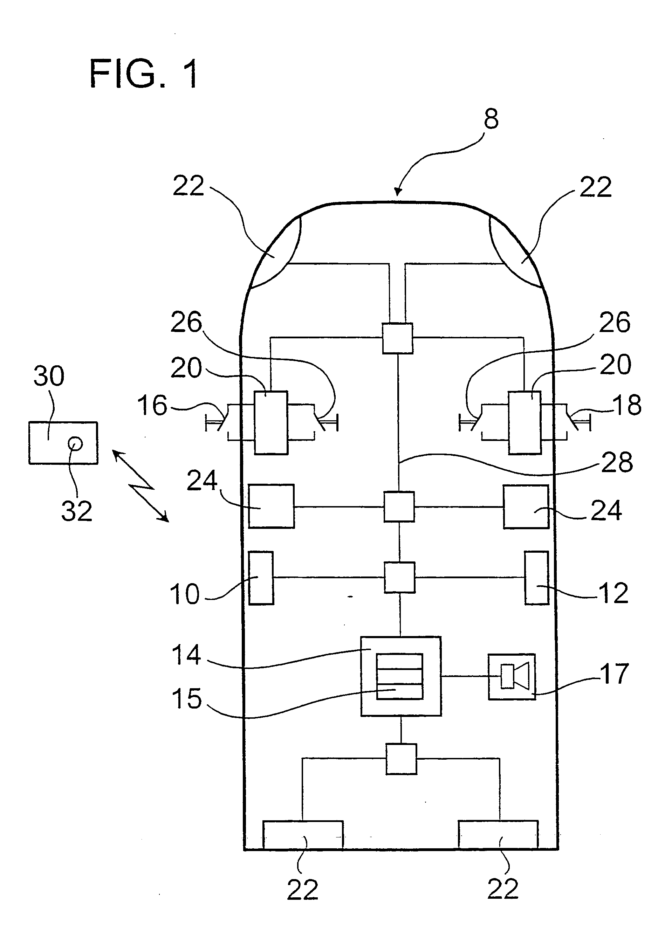

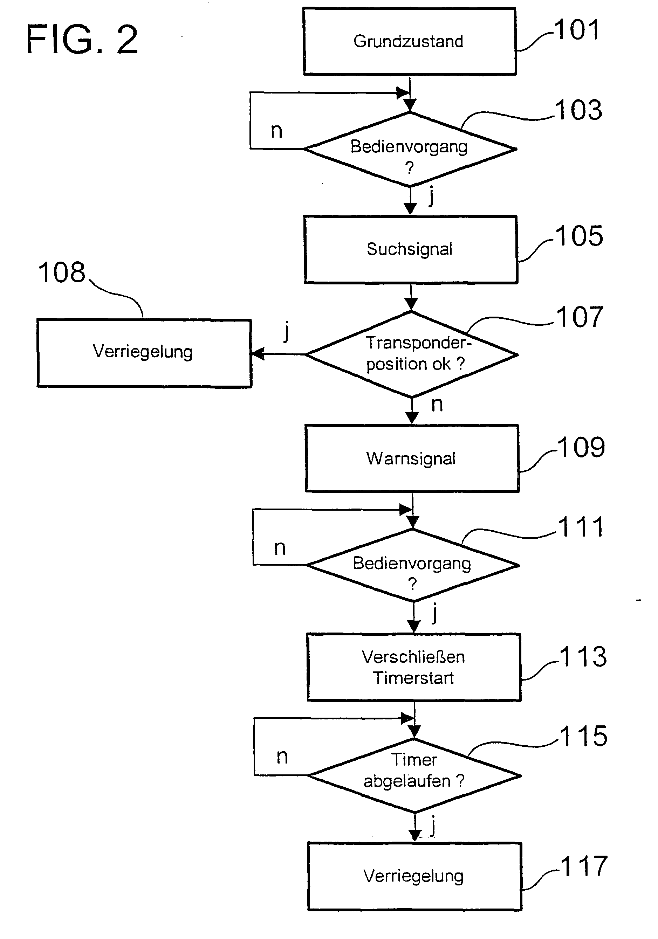

Es zeigen die Figur 1 ein Blockschaltbild und die Figur 2 ein Flußdiagramm des Ausführungsbeispiels.

### Beschreibung des Ausführungsbeispiels

Eine Außenbeleuchtung 22 des Kraftfahrzeugs 8 wird über ein Bussystem 28 von einem Steuergerät 14 angesteuert. An der linken Seite des Kraftfahrzeugs 8 ist vorzugsweise im Türgriffbereich ein linkes Außenbedienelement 16, an der rechten Außenseite ein rechtes Außenbedienelement 18 angeordnet. Im Innenraum des Kraftfahrzeugs 8 befinden sich zwei Innenbedienelemente 26. Die Schaltsignale der Außenbedienelemente 16, 18 und der Innenbedienelemente 26 werden von einer Signalerfassung 20 an das Bussystem 28 weitergeleitet. Ein mit einem Transponderbedienelement 32 versehener Transponder 30 tauscht Signale aus mit einem an der linken Seite des Kraftfahrzeugs 8 angeordneten linken Sender/Empfänger 10 oder mit einem rechten Sender/Empfänger 12. Linker und rechter Sender/Empfänger 10, 12 sind ebenfalls über das Bussystem 28 mit dem Steuergerät 14 verbunden. Die Ver-und Entriegelung der Fahrzeugtüren übernimmt ein Schließsystem 24, das beispielsweise als elektromotorisch betätigtes Schloß ausgeführt ist. Auch das Schließsystem 24 ist in der Lage, über das Bussystem 28 Signale mit dem Steuergerät 14 auszutauschen. Im Steuergerät 14 ist zudem ein Speicher 15 enthalten. Das Steuergerät 14 steuert ein Horn 17 an.
Das Ausführungsbeispiel wird anhand des Flußdiagramms gemäß Figur 2 nachfolgend beschrieben. Im Grundzustand, Schritt 101, ist der Motor des Kraftfahrzeugs 8 abgestellt, der Fahrer hat das Kraftfahrzeug 8 verlassen und seine Tür geschlossen. Er möchte nun das Kraftfahrzeug 8 verriegeln. Linkes und rechtes Außenbedienelement 16, 18 werden auf eine Betätigung hin überwacht. Ändert sich das Ausgangssignal eines der Außenbedienelemente 16, 18 leitet die Signalerfassung 20 den als Verriegelungsbefehl interpretierten Bedienvorgang über das Bussystem 28 an das Steuergerät 14 weiter. Als alternativer Bedienvorgang könnte eine Betätigung des Transponder-Bedienelements 32 den Transponder 30 zum Senden eines Verriegelungsbefehls veranlassen, der über den Sender/Empfänger 10, 12 und das Bussystem 28 an das Steuergerät 14 weitergeleitet wird. Nur wenn einer dieser Bedienvorgänge erkannt wird, gelangt man in Schritt 105. In diesem veranlaßt das Steuergerät 14 die Sender/Empfänger 10, 12 mit der Aussendung eines Suchsignals. Linker und rechter Sender/Empfänger 10, 12 sind vorzugsweise an der sogenannten B-Säule des Kraftfahrzeugs angeordnet. Durch eine entsprechende Ansteuerung der Sender/Empfänger 10, 12 wird ein elektromagnetisches Signal sowohl in den Innenraum als auch in den linken bzw. rechten Außenraum abgestrahlt. Durch das Suchsignal werden die in Reichweite befindlichen Transponder 30 zur Rücksendung eines Antwortsignals veranlaßt. Um eine eindeutige Zuordnung mehrerer Transponder 30 zu erhalten, wird jedem der dem Steuergerät 14 als zulässig bekannten Transponder 30 ein entsprechender Zeitschlitz zugeordnet, innerhalb dessen das Antwortsignal des jeweiligen Transponders 30 erwartet wird.

Ein erster Transponder sendet sein Antwortsignal innerhalb eines ersten Zeitschlitzes, ein zweiter Transponder innerhalb eines sich daran anschließenden zweiten Zeitschlitzes usw. Anhand dieser zeitlichen Zuordnung erkennt das Steuergerät 14, welche Transponder 30 sich im Erfassungsbereich befinden. Das Steuergerät 14 bestimmt anhand der eingehenden Sender/Empfänger-Signale die Position des jeweiligen Transponders 30. Befindet sich der Transponder 30 im linken Außenbereich, wird innerhalb des zugehörigen Zeitschlitzes lediglich ein Signal von dem linken Sender/Empfänger 10 empfangen. Bei einem im Innenraum befindlichen Transponder 30 empfangen sowohl linker als auch rechter Sender/Empfänger 10, 12 ein Antwortsignal des Transponders 30. Ein nur von dem rechten Sender/Empfänger 12 empfangenes Antwortsignal läßt auf die Position des Transponders 30 im rechten Außenbereich schließen.

Anhand der eingegangenen Sender-/Empfängersignale überprüft das Steuergerät 14, ob eine der nachfolgenden Bedingungen erfüllt ist, Schritt 107. Befindet sich zumindest ein Transponder 30 im Innenraum des Kraftfahrzeugs 8 oder wurde ein Transponder 30 in einem Außenbereich erkannt, der dem betätigten Bedienelement 16, 18, das den Verriegelungsbefehl ausgelöst hat, gegenüberliegt, führt das System die Aktionen in Schritt 109 aus. In Schritt 109 wird also beispielsweise dann gewechselt, wenn der Fahrer ohne Transponder das linke Außenbedienelement 16 zum Zwecke der Verriegelung betätigt, und sich ein Beifahrer mit Transponder im rechten Außenbereich aufhält. Damit wird abgeprüft, daß die Verriegelung nur sofort ausgeführt wird, wenn der Fahrer mit zugehörigem Transponder 30 auf der Fahrerseite das linke Außenbedienelement 16 betätigt hat.

Ist dies der Fall, wird die Verriegelung durchgeführt, Schritt 108. Andernfalls steuert das Steuergerät 14 die Außenbeleuchtung 22 und/oder das Horn 17 im Sinne eines Warnsignals an, um den Benutzer auf eine ungewöhnliche Transponderposition aufmerksam zu machen, Schritt 109. Die Verriegelung wird jedoch noch nicht ausgeführt. Dies erfolgt erst, wenn nochmals ein Außenbedienelement 16, 18 und/oder das Transponderbedienelement 32 betätigt wurde. Die entsprechende Abfrage auf Betätigung erfolgt in Schritt 111. Der Benutzer muß somit nochmals aktiv werden, um die Verriegelung herbeizuführen. Somit ist davon auszugehen, daß er sich der kritischen Transponderposition zwar bewußt geworden ist, sie jedoch aktiv billigend in Kauf nimmt. Nach erfolgter Betätigung der Außenbedienelemente 16, 18 wird das Schließsystem 24 im Sinne eines Verschließens angesteuert und zugleich ein Timer gestartet, Schritt 113. Als Verschließen wird hierbei die Situation verstanden, die ein Öffnen der Tür über den Außentürgriff unterbindet, jedoch ein Öffnen über die Innenbedienelemente 26 zuläßt.

Sollte sich nun noch eine Person im Innenraum des Kraftfahrzeugs 8 befinden, kann sie das Fahrzeug noch so lange verlassen, bis der Timer die vorgebbare Zeitspanne erreicht. Diese Bedingung wird in Schritt 115 abgeprüft. Nach Verstreichen der Zeitspanne wird das Kraftfahrzeug verriegelt, so daß ein Öffnen der Tür weder von Innen noch von außen möglich ist, Schritt 117. Mit dem Verriegeln des Kraftfahrzeugs 8 werden auch die im Innenraum befindlichen Transponder 30, die in der Abfrage 107 ermittelt wurden, deaktiviert. Im Steuergerät 14 wird hierzu eine Information hinterlegt, daß ein von einem im Innenraum befindlichen Transponder 30 abgegebenes Signal nicht als zulässig erkannt wird und somit weder eine Ver-bzw. Entriegelung noch eine Fahrberechtigung des Kraftfahrzeugs 8 herbeigeführt werden kann. Neben der Deaktivierungs-Information des im Innenraum befindlichen Transponders 30 wird in dem Speicher 15 noch eine Zusatzinformation abgespeichert, die beispielsweise den Zeitpunkt oder den Kilometerstand der TransponderDeaktivierung beschreibt.

Eine Aktivierung der deaktivierten Transponder 30 kann dann erfolgen, wenn das Kraftfahrzeug 8 mit Hilfe eines noch gültigen Transponders 30 regulär entriegelt wurde. Es ist dann davon auszugehen, daß ein berechtigter Benutzer Zugriff auf die im Innenraum befindlichen Transponder 30 erhält. Die in Schritt 109 ausgegebene Warnung kann auch auf einem im Kraftfahrzeug 8 befindlichen Display angezeigt werden. Es erfolgt eine Meldung, daß sich ein Transponder 30 im Innenraum befindet oder daß sich der Transponder 30 im gegenüberliegenden Außenbereich befindet. Es könnte eine entsprechende Sprachausgabe vorgesehen werden.

## Patentansprüche

1. Verfahren zur schlüssellosen Verriegelung eines Kraftfahrzeugs (8), mit einem an der linken Seite des Kraftfahrzeugs (8) angeordneten linken Sender/Empfänger (10) und mit einem an der rechten Seite des Kraftfahrzeugs (8) angeordneten rechten Sender/Empfänger (12), mit einer Mehrzahl von tragbaren Transpondern (30), die jeweils ein Transponder-Bedienelement (32) aufweisen und die mit dem linken und/oder dem rechten Sender/Empfänger (10, 12) einen Code austauschen, mit einem in dem Kraftfahrzeug (8) integrierten Steuergerät (14), das den vom jeweiligen Transponder (30) gesendeten Code mit einem erwarteten Code vergleicht und bei Übereinstimmung ein Schließsystem (24) des Kraftfahrzeugs (8) im Sinne eines Verriegelns ansteuert, mit zumindest einem zu dem Kraftfahrzeug (8) gehörenden Anzeigemittel (17, 22), das von dem Steuergerät (14) angesteuert wird, mit zumindest einem außerhalb des Kraftfahrzeugs (8) befindlichen Außenbedienelement (16, 18), wobei durch Betätigung des Außenbedienelements (16, 18) oder des Transponder-Bedienelements (32) ein Verriegelungsbefehl erzeugt wird, wobei in einem ersten Schritt (105) von dem linken und/oder rechten Sender/Empfänger (10, 12) des Kraftfahrzeugs (8) ein Suchsignal abgesetzt wird, wenn eine Betätigung zumindest eines der Bedienelemente (16, 18, 32) erfolgt, um anhand des von dem zumindest einen Transponder (30) als Antwort auf das Suchsignal an den jeweiligen Sender/Empfänger (10, 12) des Kraftfahrzeugs (8) zurückgesendeten Codes die Position des entsprechenden Transponders (30) zu bestimmen, und in einem zweiten Schritt (109) das Anzeigemittel (17, 22) angesteuert wird, wenn sich zumindest ein Transponder (30) im Innenraum des Kraftfahrzeugs (8) oder in einem Außenbereich der dem betätigten Bedienelement (16, 18, 32) gegenüberliegenden Fahrzeugseite befindet, **dadurch gekennzeichnet, dass** in einem dritten Schritt (113, 117) das Schließsystem (24) des Kraftfahrzeugs (8) im Sinne eines Verriegelns angesteuert wird, wenn zumindest eines der Bedienelemente (16, 18, 32) erneut betätigt wird.

2. Verfahren nach Anspruch 1, **dadurch gekennzeichnet, dass** das Schließsystem (24) des Kraftfahrzeugs (8) im dritten Schritt (113, 117) in der Weise im Sinne eines Verriegelns angesteuert wird, dass ein Öffnen der Fahrzeugtür nur durch zumindest ein im Innenraum des Kraftfahrzeugs (8) befindliches Innenbedienelement (26) möglich ist.

3. Verfahren nach einem der vorhergehenden Ansprüche, **dadurch gekennzeichnet, dass** das Schließsystem (24) des Kraftfahrzeugs (8) im dritten Schritt (113, 117) in der Weise im Sinne eines Verriegelns angesteuert wird, dass das Öffnen der Fahrzeugtür über das Innenbedienelement (26) des Kraftfahrzeugs (8) nur für eine Zeitspanne möglich ist.

4. Verfahren nach Anspruch 3, **dadurch gekennzeichnet, dass** nach Ablauf der Zeitspanne ein Öffnen der Fahrzeugtür über das Innenbedienelement (26) des Kraftfahrzeugs (8) nicht möglich ist.

5. Verfahren nach einem der vorhergehenden Ansprüche, **dadurch gekennzeichnet, dass** in dem dritten Schritt (113, 114) nach Ablauf der Zeitspanne im Innenraum erkannte Transponder (30) deaktiviert werden, so dass ein von diesen Transpondern (30) gesendeter Code nicht als zulässig erkannt wird.

6. Verfahren nach Anspruch 5, **dadurch gekennzeichnet, dass** mit dem Deaktivieren der im Innenraum des Kraftfahrzeugs (8) befindlichen Transponder (30) in einem Speicher (15) eine Zusatzinformation hinterlegt wird.

7. Verfahren nach Anspruch 5, **dadurch gekennzeichnet, dass** ein Aktivieren der im dritten Schritt (113, 117) deaktivierten Transponder (30) mit dem Entriegeln des Schließsystems (24) des Kraftfahrzeugs (8) erfolgt.

## Claims

1. Method for locking a motor vehicle (8) in a keyless manner, having a left-hand transmitter/receiver (10) which is arranged on the left-hand side of the motor vehicle (8) and having a right-hand transmitter/receiver (12) which is arranged on the right-hand side of the motor vehicle (8), having a multiplicity of portable transponders (30) which each have a transponder operator control element (32) and which exchange a code with the left-hand and/or the right-hand transmitter/receivers (10, 12), having a control unit (14) which is integrated into the motor vehicle (8) and which compares the code transmitted by the respective transponder (30) with an expected code and when they match actuates a locking system (24) of the motor vehicle (8) in the sense of locking, having at least one display means (17, 22) which is associated with the motor vehicle (8) and is actuated by the control unit (14), having at least one external operator control element (16, 18) located outside the motor vehicle (8), a locking command being generated by activating the external operator control element (16, 18) or the transponder operator control element (32), wherein, in a first step (105), a search signal is emitted by the left-hand and/or right-hand transmitter/receivers (10, 12) of the motor vehicle (8) if activation of at least one of the operator control elements (16, 18, 32) takes place in order to determine the position of the corresponding transponder (30) by means of the code transmitted back to the respective transmitter/receiver (10, 12) of the motor vehicle (8) by the at least one transponder (30) in response to the search signal, and in a second step (109) the display means (17, 22) is actuated if at least one transponder (30) is located in the interior of the motor vehicle (8) or in an exterior region of the vehicle side lying opposite the activated operator control element (16, 18, 32), **characterized in that** in a third step (113, 117) the locking system (24) of the motor vehicle (8) is actuated in the sense of locking if at least one of the operator control elements (16, 18, 32) is activated again.

2. Method according to Claim 1, **characterized in that** the locking system (24) of the motor vehicle (8) is actuated in the third step (113, 117) in the sense of locking in such a way that the vehicle door can be opened only by at least one internal operator control element (26) located in the interior of the motor vehicle (8).

3. Method according to one of the preceding claims, **characterized in that** the locking system (24) of the motor vehicle (8) is actuated in the third step (113, 117) in the sense of locking in such a way that the vehicle door can be opened by means of the internal operator control element (26) of the motor vehicle (8) only for a time period.

4. Method according to Claim 3, **characterized in that** after the time period has expired, the vehicle door cannot be opened by means of the internal operator control element (26) of the motor vehicle (8).

5. Method according to one of the preceding claims, **characterized in that** in the third step (113, 117) transponders (30) which are detected in the interior after the expiry of the time period are deactivated so that a code transmitted by these transponders (30) is not detected as acceptable..

6. Method according to Claim 5, **characterized in that** an additional information item is stored in a memory (15) when the transponders (30) located in the interior of the motor vehicle (8) are deactivated.

7. Method according to Claim 5, **characterized in that** the transponders (30) which are deactivated in the third step (113, 117) are activated when the locking system (24) of the motor vehicle (8) is unlocked.

## Revendications

1. Procédé pour verrouiller sans clé un véhicule automobile (8),
comportant :
- un émetteur/récepteur gauche (10) sur le côté gauche du véhicule automobile (8),
- un émetteur/récepteur droit (12) sur le côté droit du véhicule automobile (8),
- une pluralité de transpondeurs portatifs (30) dont chacun possède un élément de manoeuvre de transpondeur (32) et qui échangent un code avec l'émetteur/récepteur gauche et/ou droit (10, 12),
- un appareil de commande (14) intégré dans le véhicule automobile (8), et comparant le code émis par le transpondeur considéré (30) avec un code attendu et qui en cas d'accord commande un système de fermeture (24) du véhicule automobile (8) dans le sens d'un verrouillage,
- comportant au moins un moyen d'affichage (17, 22) faisant partie du véhicule automobile (8) et commandé par l'appareil de commande (14),
- au moins un élément de manoeuvre extérieur (16, 18) à l'extérieur du véhicule automobile (8),
un ordre de verrouillage étant produit par actionnement de l'élément de manoeuvre extérieur (16, 18) ou de l'élément de manoeuvre du transpondeur (32),
selon lequel
dans une première étape (105), un signal de recherche est envoyé par l'émetteur/récepteur gauche et/ou droit (10, 12) lorsqu'au moins un des éléments de manoeuvre (16, 18, 32) est actionné, afin de déterminer - à l'aide du code renvoyé par l'au moins un transpondeur (30), en réponse au signal de recherche, à l'émetteur/récepteur considéré (10, 12) du véhicule automobile (8) - la position du transpondeur correspondant (30), et
dans une seconde étape (109), le moyen d'affichage (17, 22) est commandé lorsqu'au moins un transpondeur (30) se trouve à l'intérieur du véhicule à moteur (8) ou dans une zone extérieure du côté du véhicule faisant face à l'élément de manoeuvre actionné (16, 18, 32),
**caractérisé en ce que**
dans une troisième étape (113, 117), l'élément de fermeture (24) du véhicule automobile (8) est commandé dans le sens d'un verrouillage lorsqu'au moins l'un des éléments de manoeuvre (16, 18, 32) est actionné à nouveau.

2. Procédé selon la revendication 1,
**caractérisé en ce que**
le système de fermeture (24) du véhicule automobile (8) est commandé dans la troisième étape (113, 117) dans le sens d'un verrouillage de telle manière qu'une ouverture de la portière du véhicule n'est possible qu'au moyen d'au moins un élément de manoeuvre intérieur (26) se trouvant à l'intérieur du véhicule automobile (8).

3. Procédé selon l'une des revendications précédentes,
**caractérisé en ce que**
le système de fermeture (24) du véhicule automobile (8) est commandé dans la troisième étape (113, 117) dans le sens d'un verrouillage de telle manière que l'ouverture de la portière du véhicule par l'intermédiaire de l'élément de manoeuvre intérieur (26) du véhicule automobile (8) n'est possible que pendant un intervalle de temps.

4. Procédé selon la revendication 3,
**caractérisé en ce qu'**
après l'écoulement de l'intervalle de temps, une ouverture de la portière du véhicule par l'intermédiaire de l'élément de manoeuvre intérieur (26) du véhicule automobile (8) n'est pas possible.

5. Procédé selon l'une des revendications précédentes,
**caractérisé en ce que**
dans la troisième étape (113, 117) après l'écoulement de l'intervalle de temps les transpondeurs (30) se trouvant à l'intérieur sont désactivés, de sorte qu'un code émis par l'un de ces transpondeurs (30) n'est pas reconnu comme admissible.

6. Procédé selon la revendication 5,
**caractérisé en ce que**
avec la désactivation des transporteurs (30) se trouvant à l'intérieur du véhicule automobile (8), une information additionnelle est déposée dans une mémoire (15).

7. Procédé selon la revendication 5,
**caractérisé en ce qu'**
une activation des transpondeurs (30) désactivés dans la troisième étape (113, 117) s'effectue avec le déverrouillage du système de fermeture (24) du véhicule automobile (8).
